# EUROPÄISCHE PATENTSCHRIFT

(11) **EP 4 191 954 B1**
(45) Veröffentlichungstag und Bekanntmachung des Hinweises auf die Patenterteilung: **19.03.2025**
(21) Anmeldenummer: 23153528.7
(22) Anmeldetag: 17.05.2018
(51) Int. Cl.: H04L 12/40, H04L 12/42

(54) **MODULEINHEIT ZUM VERBINDEN EINES DATENBUSTEILNEHMERS**
MODULE UNIT FOR CONNECTING A DATA BUS PARTICIPANT
UNITÉ MODULAIRE PERMETTANT DE CONNECTER UN ABONNÉ DE BUS DE DONNÉES

(30) Priorität: 24.05.2017 DE 102017208833
(43) Veröffentlichungstag der Anmeldung: 07.06.2023
(62) Teilanmeldung aus: 18727207.5
(73) Patentinhaber: WAGO Verwaltungsgesellschaft mbH, 32423 Minden (DE)
(72) Erfinder: JEROLM, Daniel, 49152 Bad Essen (DE); KIRSTE, Hans-Herbert, 32429 Minden (DE); LISCHEWSKI, Anton, 33790 Halle (DE); SCHADDE, Frank, 32312 Lübbecke (DE)
(74) Vertreter: Bardehle Pagenberg Partnerschaft mbB Patentanwälte Rechtsanwälte

(56) Entgegenhaltungen:
- DE-A1- 19 929 641
- DE-B3- 102013 100 603
- US-A- 3 723 971
- US-A1- 2005 111 372

## Beschreibung

### 1. Gebiet der Erfindung

Die vorliegende Erfindung betrifft eine Moduleinheit zum Verbinden eines Datenbusteilnehmers mit einem Lokalbus, insbesondere während des Betriebs des Lokalbusses.

### 2. Stand der Technik

Moduleinheiten zum Verbinden eines Datenbusteilnehmers mit einem Lokalbus werden zumeist in Automatisierungsanlagen verwendet. Automatisierungsanlagen werden insbesondere zur Steuerung von industriellen Anlagen, Gebäuden sowie von Verkehrsmitteln eingesetzt. Für die Steuerung einer Automatisierungsanlage sind zumeist mehrere Sensoren und Aktoren notwendig. Diese überwachen und steuern den von der Anlage ausgeführten Prozess. Die unterschiedlichen Sensoren und Aktoren einer Automatisierungsanlage werden dabei häufig auch als Automatisierungsgeräte bezeichnet.

Diese Automatisierungsgeräte können entweder direkt mit einer Steuerung der Automatisierungsanlage verbunden werden, oder können zunächst mit Ein- und Ausgangsmodulen, die häufig auch als E/A-Module bezeichnet werden, verbunden werden. Diese können dann wiederum direkt mit der Steuerung verbunden werden. Die Automatisierungsgeräte können dabei entweder direkt in den E/A-Modulen integriert sein oder können mit diesen über Kabel oder kabellos verbunden sein.

Die Steuerung einer Automatisierungsanlage wird in der Regel mit Hilfe einer oder mehrerer speicherprogrammierbaren Steuerungen, SPS, bewerkstelligt. Die SPSs können dabei hierarchisch oder dezentral in einer Automatisierungsanlage angeordnet sein. Dabei gibt es bei den SPS unterschiedliche Leistungsklassen, so dass diese je nach Rechen- und Speicherkapazität unterschiedliche Steuerungen und Regelungen übernehmen können. Eine SPS hat im einfachsten Fall Eingänge, Ausgänge, ein Betriebssystem (Firmware) und eine Schnittstelle, über die ein Anwenderprogramm geladen werden kann. Das Anwenderprogramm legt fest, wie die Ausgänge in Abhängigkeit von den Eingängen geschaltet werden sollen. Dabei können die Eingänge und Ausgänge mit den Automatisierungsgeräten und/oder den E/A-Modulen verbunden werden und anhand der im Anwenderprogramm hinterlegten Logik kann der Prozess, der von der Automatisierungsanlage durchgeführt wird, überwacht beziehungsweise gesteuert werden. Dabei wird die Überwachung des Prozesses durch die Sensoren bewerkstelligt und die Steuerung des Prozesses durch die Aktoren. Die Steuerung kann auch als zentrale Steuerung oder Zentraleinheit bezeichnet werden und übernimmt zumindest für ein mit der Steuerung verbundenes Automatisierungsgerät oder E/A-Modul die Steuerung.

Allerdings ist das direkte Verbinden der Automatisierungsgeräte mit der zumindest einen Steuerung oder der E/A-Module mit der zumindest einen Steuerung in Form einer parallelen Verdrahtung, d.h. von jedem Automatisierungsgerät oder jedem E/A-Modul wird je eine Leitung zur übergeordneten Steuerung verlegt, sehr aufwendig. Gerade bei steigendem Automatisierungsgrad einer Automatisierungsanlage wächst der Verkabelungsaufwand bei paralleler Verdrahtung. Dies ist mit großem Aufwand bei der Projektierung, Installation, Inbetriebnahme und Wartung verbunden.

Daher werden heutzutage in der Automatisierungstechnik zumeist Bussysteme eingesetzt, mit denen die Automatisierungsgeräte beziehungsweise die E/A-Module an die Steuerung angeschlossen werden können. Um die Anbindung der einzelnen Automatisierungsgeräte beziehungsweise der E/A-Module mit dem Bussystem noch weiter zu vereinfachen, werden heutzutage häufig einzelne Gruppen von Automatisierungsgeräten beziehungsweise E/A-Modulen mit Hilfe eines spezialisierten Lokalbusses zunächst untereinander zu einem Lokalbussystem verbunden und anschließend wird zumindest ein Teilnehmer dieses Lokalbusses mit dem Bussystem verbunden, welches mit der Steuerung verbunden ist. Dabei kann sich das Lokalbussystem von dem Bussystem unterscheiden, welches eingesetzt wird, um die Verbindung mit der Steuerung zu realisieren.

Der mit dem Bussystem der Steuerung verbundene Teilnehmer einer Gruppe von Lokalbusteilnehmern wird häufig auch als Lokalbusmaster bezeichnet. Alternativ wird auch die Bezeichnung Kopfstation des Lokalbussystems verwendet. Dieser Lokalbusmaster kann gegenüber anderen Lokalbusteilnehmer weitere Logiken, Schaltungen oder Funktionalitäten beinhalten, die zur Anbindung an das Bussystem der Steuerung notwendig sind. Auch kann der Lokalbusmaster selbst eine SPS beinhalten. Auch kann dieser Teilnehmer Logiken und Schaltungen zur Umsetzung zwischen den zwei Bussystemen aufweisen. Der Lokalbusmaster kann daher auch als Gateway oder Busumsetzer ausgebildet sein und sorgt für eine Umsetzung der im Format des einen Bussystems vorliegenden Daten in das Format des Lokalbussystems und umgekehrt. Zumeist aber nicht zwingend, ist der Lokalbusmaster auf die Anbindung des Lokalbusses an den übergeordneten Bus spezialisiert.

Die zum Einsatz kommenden Lokalbusse sind zumeist auf die speziellen Einsatzerfordernisse der Automatisierungsgeräte beziehungsweise E/A-Module abgestimmt oder berücksichtigen deren spezielle Hardwareausgestaltung. Dabei bilden die Gruppen an Automatisierungsgeräten beziehungsweise E/A-Modulen des Lokalbussystems zumeist eine Untergruppe der Automatisierungsanlage zur Ausführung einer speziellen Aufgabe in dem von der Automatisierungsanlage ausgeführten Prozess. Die auf den Bussen ausgetauschten Daten für den Prozess werden auch häufig als Lokalbusdaten oder Prozessdaten bezeichnet, weil diese Daten Informationen zur Regelung beziehungsweise Steuerung des von der Automatisierungsanlage ausgeführten Prozesses beinhaltet. Diese Daten können dabei unter anderem Messdaten, Steuerungsdaten, Zustandsdaten und/oder andere Informationen umfassen. Entsprechend des verwendeten Busprotokolls können diesen Daten andere Daten vorangestellt *(engl.* Header) oder angehängt *(engl.* Tail) sein. Diese anderen Daten können Informationen bezüglich der Daten beinhalten, oder Informationen bezüglich einer internen Kommunikation auf dem Lokalbus beinhalten. Hierbei ist eine Vielzahl von unterschiedlichen Informationen bekannt, die entsprechend des verwendeten Busprotokolls den Prozessdaten vorangestellt oder angefügt werden können. Die an einen Lokalbus angeschlossenen Lokalbusteilnehmer können auch als Datenbusteilnehmer bezeichnet werden, weil diese Daten auf dem Lokalbus austauschen. Ein Datenbusteilnehmer kann dabei zum Steuern oder Überwachen eines Prozesses dienen, insbesondere durch eine Ausgabe von Steuersignalen z.B. an Aktoren und/oder durch einen Empfang von Messsignalen z.B. von Sensoren. Der Datenbusteilnehmer setzt die Steuersignale und/oder Messsignale in Prozessdaten für den Lokalbus um oder umgekehrt. Die Datenbusteilnehmer können auch als Lokalbusteilnehmer bezeichnet werden.

Ein Beispiel eines Lokalbusses ist ein Ringbus, der eine spezialisierte Form des Lokalbusses darstellt, wie zum Beispiel aus US 5,472,347 A bekannt. In einem Ringbus sind die Datenbusteilnehmer, zum Beispiel die Automatisierungsgeräte beziehungsweise E/A-Module, jeweils mit ihren direkt benachbarten Datenbusteilnehmern verbunden und Daten werden der Reihe nach von einem zum anderen Datenbusteilnehmer weitergeleitet. Es werden also nicht allen Datenbusteilnehmern gleichzeitig die Daten zugesandt, sondern der Reihe nach, wobei ein Datenbusteilnehmer von seinem vorgelagerten Datenbusteilnehmer Daten erhält und Daten an seinen nachgelagerten Datenbusteilnehmer weiterleitet. Zwischen dem Erhalt der Daten und der Weiterleitung kann der Datenbusteilnehmer die erhaltenen Daten verarbeiten. Wenn die Daten den letzten Datenbusteilnehmer in der Reihe erreicht haben, so werden die Daten vom letzten Datenbusteilnehmer wieder der Reihe nach zurück an den ersten Datenbusteilnehmer zurückgeleitet. Das Zurückleiten kann dabei entweder durch alle Datenbusteilnehmer geschehen oder an diesen vorbei mit Hilfe einer Bypassleitung. Der Ringbus hat also einen Abwärtsstrom und Aufwärtsstrom von Daten. Die Daten in einem Ringbus werden meist in Form von Datenpaketen übertragen, die alle Datenbusteilnehmer durchlaufen.

In einer geschlossenen Ringbusanordnung ist es notwendig, dass jeder Steckplatz des Lokalbusses mit einem Datenbusteilnehmer belegt ist, so dass Daten der Reihe nach von einem zum anderen Datenbusteilnehmer weitergeleitet werden können. Falls ein Steckplatz nicht mit einem Datenbusteilnehmer belegt ist, wird der Bus, beziehungsweise der Abwärtsstrom und/oder der Aufwärtsstrom unterbrochen und ein Weiterleiten, beziehungsweise ein Zurückleiten der Daten funktioniert nicht mehr. Auch würde ein Entfernen eines entsprechend gesteckten Datenbusteilnehmers während des Betriebs den Bus sofort unterbrechen.

Das Patent DE 10 2013 100603 B3 offenbart eine Schaltungsanordnung zum Anschließen eines Busteilnehmers an einen Bus, insbesondere ein System zum Verbinden eines Datenbusteilnehmers mit einem lokalen Ringbus. Ein weiteres, aus dem Stand der Technik bekanntes Netzwerk mit Ringtopologie wird in der Patentanmeldung US 2005/111372 A1 beschrieben.

Ausgehend hiervon ist es die Aufgabe der vorliegenden Erfindung, eine verbesserte Moduleinheit bereitzustellen, welche es ermöglicht, dass ein Lokalbus auch bei dem Entfernen von einem oder mehreren Datenbusteilnehmern nicht unterbrochen wird, sondern weiter betrieben wird.

### 3. Zusammenfassung der Erfindung

Diese Aufgabe wird mit einer Moduleinheit entsprechend dem unabhängigen Anspruch gelöst. Vorteilhafte Ausführungsformen sind in den Unteransprüchen beschrieben.

Die erfindungsgemäße Moduleinheit zum Verbinden eines Datenbusteilnehmers mit einem lokalen Ringbus, weist eine erste Eingangsschnittstelle und eine erste Ausgangsschnittstelle auf, die verbindbar sind mit dem Lokalbus. D.h. die erste Eingangsschnittstelle und eine erste Ausgangsschnittstelle sind angepasst, um mit dem Lokalbus verbunden zu werden. Die erfindungsgemäße Moduleinheit weist weiterhin eine erste Datenverbindungsschnittstelle auf, die mit dem Datenbusteilnehmer verbindbar ist. D.h. die Datenverbindungsschnittstelle ist angepasst, um mit dem Datenbusteilnehmer verbunden zu werden. Des Weiteren weist die erfindungsgemäße Moduleinheit ein erstes Schaltmittel auf, das angepasst ist, in Abhängigkeit von einer Steuereingabe von dem Datenbusteilnehmer einen ersten oder einen zweiten Schaltzustand einzunehmen, wobei in dem ersten eingenommenen Schaltzustand die erste Eingangsschnittstelle mit der ersten Ausgangsschnittstelle verbunden ist und in dem zweiten eingenommenen Schaltzustand die erste Datenverbindungsschnittstelle mit der ersten Ausgangsschnittstelle verbunden ist. D.h. je nach Schaltzustand des Schaltmittels ist entweder die erste Eingangsschnittstelle mit der ersten Ausgangsschnittstelle verbunden und Daten werden nur durch die Moduleinheit geleitet, wohingegen in dem anderen Schaltzustand Daten die an der ersten Eingangsschnittstelle anliegen nicht direkt auf die erste Ausgangsschnittstelle geleitet werden, sondern die Daten an der ersten Ausgangsschnittstelle abhängig sind von der ersten Datenverbindungsschnittstelle, also beispielsweise von den Daten, die der Datenbusteilnehmer an dieser ersten Datenverbindungsschnittstelle bereitstellt. Beispielsweise kann das Schaltmittel dabei angepasst sein, die jeweiligen Schaltzustände danach zu richten, ob ein Datenbusteilnehmer mit der Moduleinheit verbunden ist oder nicht. Im Falle dessen, dass kein Datenbusteilnehmer mit der Moduleinheit verbunden ist kann das Schaltmittel beispielsweise den ersten Schaltzustand herstellen, wohingegen das Schaltmittel im Falle dessen, dass ein Datenbusteilnehmer verbunden ist mit der Moduleinheit den zweiten Schaltzustand herstellen kann.

Durch die erfindungsgemäße Moduleinheit lässt sich aus dem Lokalbus ein Datenbusteilnehmer entfernen oder es lässt sich ein Datenbusteilnehmer hinzufügen, ohne dass der Lokalbus längere Zeit unterbrochen wird. Es ist vor allem vorteilhaft bei der erfindungsgemäßen Moduleinheit, dass der Abwärtsstrom an Daten nicht unterbrochen wird, auch wenn ein Datenbusteilnehmer hinzugefügt oder entfernt wird, weil die Moduleinheit in diesem Fall immer noch eine Verbindung zwischen der ersten Eingangsschnittstelle und Ausgangsschnittstelle herstellt.

In einer bevorzugten Ausführungsform der erfindungsgemäßen Moduleinheit weist diese eine zweite Datenverbindungsschnittstelle auf, die verbindbar ist mit dem Datenbusteilnehmer - also angepasst ist mit dem Datenbusteilnehmer verbunden zu werden -, wobei das erste Schaltmittel weiter angepasst ist, die zweite Datenverbindungsschnittstelle mit der ersten Eingangsschnittstelle zu verbinden. D.h. die Daten, die an der ersten Eingangsschnittstelle anliegen, werden an eine zweite Datenverbindungsschnittstelle geleitet, so dass diese dem Datenbusteilnehmer zugeleitet werden können, der damit eine Verarbeitung durchführen kann. Anschließend kann der Datenbusteilnehmer die verarbeiteten Daten auf der ersten Datenverbindungsschnittstelle ausgeben, die mit der ersten Ausgangsschnittstelle verbunden ist, so dass die verarbeiteten Daten an die nächste Moduleinheit beziehungsweise den nächsten Datenbusteilnehmer weitergeleitet werden können. Dabei kann das Schaltmittel die Verbindung zwischen der zweiten Datenverbindungsschnittstelle und der ersten Eingangsschnittstelle im gleichen Schaltzustand herstellen, in dem auch die erste Datenverbindungsschnittstelle mit der ersten Ausgangsschnittstelle verbunden wird. Es ist aber auch denkbar, dass die Verbindung zwischen der zweiten Datenverbindungsschnittstelle und der ersten Eingangsschnittstelle in einem dem ersten Schaltzustand vor- oder nachgelagerten Schaltzustand hergestellt wird. D.h. die Verbindung der ersten Datenverbindungsschnittstelle mit der ersten Ausgangsschnittstelle kann gleichzeitig mit der Verbindung der zweiten Datenverbindungsschnittstelle mit der ersten Eingangsschnittstelle hergestellt werden oder die entsprechenden Verbindungen können nacheinander hergestellt werden. Die auf dem Lokalbus gesendeten Daten können in Form von Datenpaketen übertragen werden. Die Datenpakete können auch als Telegramme bezeichnet werden. Ein Datenpaket weist beispielsweise Header, Payload und vorteilhafterweise eine Prüfsumme auf.

In einer weiteren bevorzugten Ausführungsform der erfindungsgemäßen Moduleinheit ist die erste Eingangsschnittstelle angepasst zum Empfangen von Daten, wohingegen die erste Ausgangsschnittstelle angepasst ist zum Senden von Daten. Dabei empfängt die erste Eingangsschnittstelle Daten von einem vorgelagerten Datenbusteilnehmer beziehungsweise einer vorgelagerten Moduleinheit oder dem Lokalbusmaster. Die Ausgangsschnittstelle sendet Daten an einen nachgelagerten Datenbusteilnehmer beziehungsweise eine nachgelagerte Moduleinheit. Das Empfangen und Senden kann passiv oder aktiv sein. D.h. das Empfangen kann beispielsweise ausschließlich darin bestehen, dass ein Signal an der ersten Eingangsschnittstelle anliegt, aber keine Signalverarbeitung stattfindet. In diesem Fall kann von einem passiven Empfangen gesprochen werden. Im Falle dessen, dass beispielsweise eine Signalverarbeitung stattfindet, so kann von einem aktiven Empfangen gesprochen werden. Das gleiche gilt auch für das Senden, wird keine Signalverarbeitung durchgeführt, d.h. das Signal also einfach an der ersten Ausgangsschnittstelle bereitgestellt, so kann von einem passiven Senden gesprochen werden, wohingegen falls eine Signalverarbeitung durchgeführt wird von einem aktiven Senden gesprochen werden kann. Die erste Eingangsschnittstelle und die erste Ausgangsschnittstelle können dabei beide passiv oder aktiv sein, d.h. keine oder eine Signalverarbeitung durchführen, oder eine der beiden Schnittstellen kann aktiv sein wohingegen die andere passiv ist, d.h. die eine führt eine Signalverarbeitung durch, wohingegen die andere keine Signalverarbeitung durchführt. Dem Fachmann ist bewusst, dass mit dem Begriff Signalverarbeitung jegliche Verarbeitung eines Signals gemeint sein kann, beispielsweise eine Codierung, eine Decodierung, Anwenden einer Modulierung oder De-Modulierung, Umsetzung auf oder von einem Übertragungsformat in ein anderes Format etc. Hierbei sind auch die entsprechenden Signalverarbeitungen für die Umsetzung von kabelgebundenen Signalen auf kabellose Signale umfasst. In einem Ringbus werden die Daten in Form von Datenpaketen gesendet, die alle Datenbusteilnehmer durchlaufen. Datenpakete werden innerhalb eines Zyklusrahmens vom Lokalbusmaster zu den Datenbusteilnehmern gesendet.

Ein Zyklusrahmen kann dabei beispielsweise als ein wiederkehrendes (zyklisches) vorzugsweise äquidistantes Zeitintervall, in dem Daten auf dem Lokalbus übertragbar sind, definiert werden. Der Zyklusrahmen weist beispielsweise zumindest eine Startkennung (SOC) und einen Zeitbereich zur Übertragung von Daten auf. Mehrere Startkennungen (SOC) aufeinander folgender Zyklusrahmen sind dabei vorteilhafterweise in einem zeitlich äquidistanten Abstand zueinander. Der genannte Zeitbereich ist für die Übertragung der Datenpakete vorgesehen. Die Startkennung (SOC) und die Datenpakete werden über den Lokalbus übertragen und durchlaufen alle Datenbusteilnehmer. Die Startkennung (SOC) ist separat, also als eigenständiges Symbol übertragbar oder vorteilhafterweise in einem Startdatenpaket (SOC-Paket) enthalten.

Innerhalb des Zeitbereichs des Zyklusrahmens werden keine, ein oder mehrere Datenpakete übertragen. Vorteilhafterweise werden in einem Zyklusrahmen Leerlauf-Daten (Idle-Data) eingefügt, insbesondere angrenzend an zumindest ein Datenpaket. Vorteilhafterweise bewirkt die Übertragung der Datenpakete und/oder der Leerlauf-Daten ein ununterbrochenes Signal auf dem Lokalbus. Das Signal ermöglicht es den Datenbusteilnehmern, sich auf dieses zeitlich zu synchronisieren. Vorteilhafterweise weist der Zyklusrahmen zusätzlich einen Trailer auf. Der Trailer hat eine variable Länge und folgt auf den Zeitbereich zur Datenübertragung vorzugsweise bis zur folgenden Startkennung (SOC) des nächsten Zyklusrahmens. Vorteilhafterweise weist der Trailer Leerlauf-Daten auf.

Die im Zyklusrahmen übertragenen Datenpakete werden dabei vorzugsweise originär vom Lokalbusmaster erzeugt und über den Ringbus an die Datenbusteilnehmer gesendet. Beim Erzeugen kann der Lokalbusmaster von der Steuerung, beispielsweise einer SPS, empfangene Prozessdaten in ein Datenpaket einfügen. Das Datenpaket kann aber auch Prozessdaten von dem Lokalbusmaster selbst und/oder der Steuerung enthalten. Das Datenpaket und damit die darin enthaltenen Prozessdaten durchlaufen dann schrittweise die einzelnen Datenbusteilnehmer des Ringbusses. Dabei kann das Datenpaket eine Vielzahl von Symbolen aufweisen, wobei jedes Symbol eine bestimmte Anzahl von Bits aufweist, beispielsweise 8 Bits also 1 Byte. Das Datenpaket durchläuft dementsprechend einheitenweise, stückchenweise, oder Teile weise, zum Beispiel in Form von Symbolen die Datenbusteilnehmer. Die Datenbusteilnehmer haben dementsprechend zu jeder gegebenen Zeit immer nur einen Teil des Datenpakets vorliegen. Wenn hier also von Daten gesprochen wird, so kann dies auch meinen, ein Symbol des Datenpakets, das gerade den Ringbus durchläuft. Ein Datenpaket welches Prozessdaten trägt kann auch als Prozessdatenpaket bezeichnet werden. Das Prozessdatenpaket weist die Prozessdaten auf, die von den Datenbusteilnehmern des Lokalbusses gesendet und/oder empfangen werden. Vorteilhafterweise weist das Prozessdatenpaket keine Adresse zur Übertragung der Prozessdaten an einen oder von einem Datenbusteilnehmer im Lokalbus auf. In dem Prozessdatenpaket sind die Prozessdaten derart angeordnet, dass Datenbusteilnehmer auf Grund der jeweiligen Position der Prozessdaten in dem Prozessdatenpaket, beispielsweise ein oder mehrere Bits innerhalb eines zugeordneten zusammenhängenden Datenblocks (1 Byte), diejenigen dem jeweiligen Datenbusteilnehmer zugehörigen Prozessdaten erkennen können. Vorteilhafterweise weist das Prozessdatenpaket eine Kennung (IDE) auf, die dem Typ des Datenpakets, also dem Prozessdatenpaket zugeordnet und durch den Datenbusteilnehmer identifizierbar ist.

Ein Datenpaket kann aber auch ein Kommunikationsdatenpaket sein, welches keine Prozessdaten aufweist und insbesondere zum Programmieren und/oder zum Steuern und/oder zum Überwachen und/oder zum Identifizieren zumindest eines Datenbusteilnehmers dient. Vorteilhafterweise weist das Kommunikationsdatenpaket eine Adresse auf, die mindestens einem Datenbusteilnehmer zugeordnet ist. Vorzugsweise ist der Datenbusteilnehmer eingerichtet, die Adresse auszuwerten und das Kommunikationsdatenpaket entsprechend zu verarbeiten.

In einer weiteren bevorzugten Ausführungsform der erfindungsgemäßen Moduleinheit weist die erste Eingangsschnittstelle zumindest einen lösbaren elektrischen Kontakt zum Anschluss an den Lokalbus und/oder die erste Ausgangsschnittstelle zumindest einen lösbaren elektrischen Kontakt zum Anschluss an den Lokalbus auf. Dabei können über den einen elektrischen Kontakt der ersten Eingangsschnittstelle Signale von dem vorgelagerten Datenbusteilnehmer beziehungsweise der vorgelagerten Moduleinheit empfangen werden und über den einen elektrischen Kontakt der ersten Ausgangsschnittstelle können Signale gesendet werden an den nachgelagerten Datenbusteilnehmer beziehungsweise die nachgelagerte Moduleinheit. Dabei kann das Senden und Empfangen passiv oder aktiv geschehen. Dem Fachmann ist auch bewusst dass die Schnittstellen auch eine andere Anzahl an Kontakten aufweisen können und die Anzahl nur von der konkreten Ausgestaltung des Lokalbusses abhängig ist. Dem Fachmann ist auch bewusst, dass die Kontakte als Steck, Schneid oder anderweitige Kontakte ausgebildet sein können, mit denen sich eine elektrisch leitende Verbindung herstellen lässt. Es ist auch denkbar, dass eine optische Verbindung hergestellt wird. Dass die Kontakte lösbar sind bedeutet, dass diese nicht eine feste Verbindung eingehen, sondern durch Ausübung einer gewissen Kraft wieder voneinander gelöst werden können.

Die erste Datenverbindungsschnittstelle und/oder die zweite Datenverbindungsschnittstelle weisen jeweils zumindest einen lösbaren elektrischen Kontakt zum Anschluss an den Datenbusteilnehmer auf. Dabei kann die zweite Datenverbindungsschnittstelle dazu angepasst sein dem Datenbusteilnehmer über den Kontakt Signale zu senden, wobei dieses Senden passiv oder aktiv geschehen kann, und die erste Datenverbindungsschnittstelle kann dazu angepasst sein Signale von dem Datenbusteilnehmer zu empfangen, wobei dieses Empfangen passiv und aktiv geschehen kann. Dem Fachmann ist auch bewusst, dass die Schnittstellen auch eine andere Anzahl an Kontakten aufweisen können und die Anzahl nur von der konkreten Ausgestaltung der Datenbusteilnehmer abhängig ist. Dem Fachmann ist auch bewusst, dass die Kontakte als Steck, Schneid oder anderweitige Kontakte ausgebildet sein können, mit denen sich eine elektrisch leitende Verbindung herstellen lässt. Es ist auch denkbar, dass eine optische Verbindung hergestellt wird.

Jede Moduleinheit weist diese zumindest ein Verbindungselement auf, um mit einer weiteren Moduleinheit verbunden zu werden, wobei die erste Ausgangsschnittstelle der Moduleinheit elektrisch verbunden wird mit einer ersten Eingangsschnittstelle der weiteren Moduleinheit, oder die erste Eingangsschnittstelle der Moduleinheit elektrisch verbunden wird mit einer ersten Ausgangsschnittstelle der weiteren Moduleinheit. Das Verbindungselement stellt dabei eine mechanische Verbindung zwischen den zwei Moduleinheiten her, wobei die Verbindung nur durch Aufbringen einer gewissen Kraft wieder gelöst werden kann. Dementsprechend kann auch gesagt werden, dass das Verbindungselement ein mechanisches Verbindungselement ist. Das mechanische Verbindungselement wird dadurch gebildet, dass die Moduleinheiten an der einen Seite Rasthaken aufweisen und an der gegenüberliegenden Seite Ausnehmungen oder Hinterschneidungen, so dass wenn zwei Moduleinheiten aneinander angeordnet werden, die Rasthaken der einen Moduleinheit in die Ausnehmungen oder die Hinterschneidungen der anderen Moduleinheit greifen, so dass diese mechanisch aber lösbar verbunden werden können. Beim Verbinden der Moduleinheiten ist dabei das Verbindungselement derart ausgestaltet, dass mit Verbindung der Moduleinheiten auch eine elektrische Verbindung der Schnittstellen stattfindet. Dabei wird die erste Ausgangsschnittstelle der einen Moduleinheit mit der ersten Eingangsschnittstelle der anderen nachgelagerten Moduleinheit elektrisch verbunden. Das Verbindungselement sorgt dann dafür, dass die Moduleinheiten nur durch Aufbringung einer gewissen Kraft, die die Haltekraft des Verbindungselements übersteigt, wieder voneinander gelöst werden können und somit die elektrischen Verbindungen wieder gelöst werden. Die Moduleinheiten können auch derart angepasst sein, dass diese nebeneinander auf einer Hutschiene angeordnet werden können und das Verbindungselement kann derart ausgestaltet sein, dass dieses die Moduleinheit auf der Hutschiene fixiert, so dass eine weitere Moduleinheit mit ihrem Verbindungselement direkt an die auf der Hutschiene bereits fixierte Moduleinheit fixiert werden kann. Hierdurch lassen sich mehrere Moduleinheiten aneinanderreihen und an der Hutschiene fixieren. Dabei kann der zumindest eine Kontakt der ersten Ausgangsschnittstelle der einen Moduleinheit in Kontakt mit der ersten Eingangsschnittstelle der nachgelagerten direkt benachbarten Moduleinheit gebracht werden, um so eine elektrische Verbindung herzustellen.

In einer weiteren bevorzugten Ausführungsform der erfindungsgemäßen Moduleinheit weist dieses zumindest ein Verbindungselement auf, um mit einem Datenbusteilnehmer verbunden zu werden, wobei die erste Datenverbindungsschnittstelle und/oder die zweite Datenverbindungsschnittstelle elektrisch verbunden werden mit dem Datenbusteilnehmer. Dabei kann das Verbindungselement zumindest derart ausgestaltet sein, dass dieses ein lösbares mechanisches Verbinden des Datenbusteilnehmers mit der Moduleinheit erlaubt. Beispielsweise kann dies durch geeignete Steck- oder Klemmverbindungselemente an der Moduleinheit und an dem Datenbusteilnehmer realisiert werden, so dass der Datenbusteilnehmer nur bei Aufbringen einer durch diese Elemente bereitgestellten Haltekraft wieder von der Moduleinheit gelöst werden kann. Es ist auch denkbar, dass Sicherungselemente eingesetzt werden, die ein unbeabsichtigtes Lösen der Datenbusteilnehmer, beispielsweise bei starken Vibrationen, verhindern. Diese Sicherungselemente können beispielsweise nur mit einem Werkzeug gelöst werden oder stellen eine zusätzliche Haltekraft dar. Wenn der Datenbusteilnehmer mit der Moduleinheit verbunden ist, dann sind auch die erste und/oder zweite Datenverbindungsschnittstelle mit dem Datenbusteilnehmer verbunden, der entsprechende komplementäre Kontakte aufweist. Dies kann mit entsprechenden Steck- oder Klemmkontakten realisiert werden.

In einer weiteren bevorzugten Ausführungsform der erfindungsgemäßen Moduleinheit weist diese eine zweite Eingangsschnittstelle und eine zweite Ausgangsschnittstelle zum Verbinden mit dem Lokalbus auf. Diese Schnittstellen bilden die Aufwärtsverbindung des Lokalbusses und erlauben es Signale, die von einem nachgelagerten Datenbusteilnehmer beziehungsweise einer nachgelagerten Moduleinheit an der zweiten Eingangsschnittstelle empfangen werden an einen vorgelagerten Datenbusteilnehmer oder Moduleinheit über die zweite Ausgangsschnittstelle zu senden. Dabei kann das Senden und Empfangen passiv oder aktiv geschehen. In einer einfachen Ausgestaltung kann die Moduleinheit eine direkte elektrisch oder optisch leitende Verbindung zwischen der zweiten Eingangsschnittstelle und der zweiten Ausgangsschnittstelle aufweisen. D.h. in dieser Ausgestaltung werden die Daten in Aufwärtsrichtung nur durch die Moduleinheit hindurch geleitet. Alternativ kann die Moduleinheit aber auch eine dritte und eine vierte Datenverbindungsschnittstelle aufweisen zum Verbinden mit dem Datenbusteilnehmer, und ein zweites Schaltmittel, das angepasst ist in Abhängigkeit von der Steuereingabe von dem Datenbusteilnehmer einen ersten oder einen zweiten Schaltzustand einzunehmen, und in dem ersten Schaltzustand die zweite Eingangsschnittstelle mit der zweiten Ausgangsschnittstelle zu verbinden und in dem zweiten Schaltzustand die dritte Datenverbindungsschnittstelle mit der zweiten Eingangsschnittstelle zu verbinden und/oder die vierte Datenverbindungsschnittstelle mit der zweiten Ausgangsschnittstelle zu verbinden. D.h. in dieser Ausgestaltung können auch in Aufwärtsrichtung Signale kommend von dem nachgelagerten Datenbusteilnehmer beziehungsweise der nachgelagerten Moduleinheit von dem Datenbusteilnehmer verarbeitet werden. Dies hat insbesondere in einem Ringbus den Vorteil, dass die den Datenbusteilnehmer passierenden Symbole des Datenpakets zweimal verarbeitet werden können, nämlich einmal wenn diese in Abwärtsrichtung gesendet werden und das zweite Mal, wenn diese in Aufwärtsrichtung gesendet werden.

In einer weiteren bevorzugten Ausführungsform der erfindungsgemäßen Moduleinheit sind das erste und/oder zweite Schaltmittel elektrisch steuerbar. D.h. die Steuereingabe ist ein elektrisches Signal und entsprechend des elektrischen Signals nehmen das erste und/oder zweite Steuermittel einen entsprechenden Schaltzustand an. Die Formulierung "das erste und/oder das zweite Schaltmittel" bedeutet, dass mindestens eines der Schaltmittel derart ausgestaltet ist. Wenn es nur ein erstes Schaltmittel gibt, ist dieses derart ausgestaltet. Wenn die Moduleinheit mehrere Schaltmittel aufweist, ist mindestens ein Schaltmittel derart ausgestaltet, vorzugsweise sind aber alle Schaltmittel derart ausgestaltet. Dabei können beide Schaltmittel mit dem gleichen Steuersignal beaufschlagt werden, so dass beide Schaltmittel gleichzeitig gesteuert werden, oder die Schaltmittel können mit unterschiedlichen Steuersignalen beaufschlagt werden. Das Steuersignal kann dabei beispielsweise vom Datenbusteilnehmer selbst erzeugt werden und erst dann erzeugt werden, wenn eine bestimmte Bedingung eingetroffen ist. Beispielsweise können beide Schaltmittel zunächst im ersten Schaltzustand sein, also eine Durchleitung von Signalen in Abwärts- und Aufwärtsrichtung bereitstellen. Wenn der Datenbusteilnehmer mit der Moduleinheit verbunden wird, kann dieser beispielsweise unverzüglich ein Steuersignal bereitstellen, was die Schaltmittel veranlasst in den zweiten Schaltzustand zu wechseln, so dass die Signale nicht mehr an dem Datenbusteilnehmer vorbei geleitet werden, sondern von diesem verarbeitet werden können. Es kann aber auch sein, dass der Datenbusteilnehmer zunächst eine gewisse Zeit braucht, bis dieser kommunikationsbereit beziehungsweise verarbeitungsbereit ist, und ein Steuersignal wird erst nach dieser Zeit an die Moduleinheit gesendet, so dass erst wenn die Bereitschaft der Kommunikation beziehungsweise die Bereitschaft der Verarbeitung besteht, die Daten an den Datenbusteilnehmer geleitet werden. Das Steuersignal selbst kann jedes Signal sein, das in der Lage ist eine Information von dem Datenbusteilnehmer an das Schaltmittel zu transportieren. Beispielsweise kann diese Information mittels eines elektrischen oder optischen Signals transportiert werden. Das Steuersignal kann dabei beispielsweise ein binäres Signal sein, welches nur angibt ob oder ob nicht ein Schaltzustand eingenommen werden soll. Dabei kann das erste und/oder das zweite Schaltmittel mindestens ein elektromechanischer Schalter sein. Beispielsweise kann das erste und/oder das zweite Schaltmittel ein Relais mit einem Elektromagneten sein, das derart ausgestaltet ist, dass das elektrische Steuersignal das Relais betätigen kann. Der elektromechanische Schalter kann sich in oder an der Moduleinheit befinden. Das erste und/oder das zweite Schaltmittel können alternativ auch ein elektronischer Schalter sein. Der Schalter kann in Form eines Halbleiterbauelements, wie beispielsweise durch einen Feldeffekttransistor, Bipolartransistor oder durch eine Diodenschaltung realisiert werden. Der elektronische Schalter kann mittels dem elektrischen Steuersignal geschaltet werden. Vorteilhaft haben elektronische Schalter eine kürzere Schaltdauer als elektromechanische Schalter und sind außerdem prell- und verschleißfrei. Auch der elektronische Schalter kann sich in oder an der Moduleinheit befinden.

In einer weiteren bevorzugten Ausführungsform der erfindungsgemäßen Moduleinheit sind das erste und/oder zweite Schaltmittel mechanisch steuerbar. D.h. die Steuereingabe ist eine mechanische Eingabe und entsprechend der Eingabe nehmen das erste und/oder zweite Steuermittel einen entsprechenden Schaltzustand an. D.h. die Schaltmittel werden mechanisch von dem ersten in den zweiten Schaltzustand überführt. Beispielsweise kann dies geschehen durch eine an dem Datenbusteilnehmer angeordnete Geometrie, die wenn der Datenbusteilnehmer an der Moduleinheit angeordnet wird, das Schaltmittel oder die Schaltmittel von einem ersten Schaltzustand in einen zweiten Schaltzustand schaltet. Wenn der Datenbusteilnehmer mit der entsprechenden Geometrie dann wieder entfernt wird, kann das Schaltmittel oder die Schaltmittel wieder zurück von dem zweiten Schaltzustand in den ersten Schaltzustand überführt werden. Hierfür kann die Geometrie beispielsweise stiftförmig ausgelegt sein, um in einem entsprechend ausgestalteten Schaltmittel den Schaltzustand zu ändern.

In einer weiteren bevorzugten Ausführungsform der erfindungsgemäßen Moduleinheit sind das erste und/oder zweite Schaltmittel optisch steuerbar. D.h. die Steuereingabe ist ein optisches Signal und entsprechend des Signals nehmen das erste und/oder zweite Steuermittel einen entsprechenden Schaltzustand an.

In einer weiteren bevorzugten Ausführungsform der erfindungsgemäßen Moduleinheit sind das erste Schaltmittel und/oder das zweite Schaltmittel angepasst, den ersten Schaltzustand einzunehmen, wenn keine Steuereingabe vorliegt, insbesondere wenn kein Datenbusteilnehmer mit der Moduleinheit verbunden ist. D.h. wenn kein Datenbusteilnehmer mit der Moduleinheit verbunden ist, liegt kein Steuersignal vor, oder es gibt keine Geometrie, die einen Schaltzustand hervorruft. In diesem Fall wird der erste Schaltzustand bevorzugt, der eine Durchleitung der Signale auf dem Lokalbus in Abwärts- und Aufwärtsrichtung erlaubt. Die Moduleinheit stellt in diesem Fall eine Durchleitung bereit. Beispielsweise kann dies durch das Herstellen eines niederohmigen Pfades, beziehungsweise eines leitenden Pfades zwischen den Eingangs- und Ausgangsschnittstellen geschehen.

In einer weiteren bevorzugten Ausführungsform der erfindungsgemäßen Moduleinheit sind das erste Schaltmittel und/oder das zweite Schaltmittel in dem ersten Schaltzustand angepasst, die zweite Datenverbindungsschnittstelle und/oder die dritte Datenverbindungsschnittstelle mit einem festen Potential zu verbinden. D.h. es wird ein Bezugspotential geschaffen.

In einer weiteren bevorzugten Ausführungsform der erfindungsgemäßen Moduleinheit kann diese ein Gehäuse aus Kunststoff oder einem anderen nicht leitenden Werkstoff aufweisen, so dass die Schnittstellen elektrisch isoliert sind von der Umgebung. Dabei kann das Gehäuse beispielsweise angepasst sein den Datenbusteilnehmer tragend aufzunehmen. Des Weiteren kann das Gehäuse angepasst sein die Moduleinheit an einer Hutschiene zu fixieren.

In einer weiteren bevorzugten Ausführungsform der erfindungsgemäßen Moduleinheit weist die Moduleinheit eine Spannungs-Verbindungsschnittstelle zum Verbinden einer Spannungsquelle mit dem Datenbusteilnehmer auf. Die Spannungs-Verbindungsschnittstelle kann ähnlich wie die Datenverbindungsschnittstellen ausgeprägt sein, so dass ein lösbares Verbinden des Datenbusteilnehmers mit der Moduleinheit möglich ist. Die Spannungs-Verbindungsschnittstelle versorgt den Datenbusteilnehmer mit Netzspannung, so dass der Datenbusteilnehmer betrieben werden kann. Die zugehörige Spannungsquelle kann sich in oder an der Moduleinheit befinden, oder außerhalb der Moduleinheit angeordnet sein.

In noch einer weiteren bevorzugten Ausführungsform der erfindungsgemäßen Moduleinheit weist die Moduleinheit eine Steuereingabeschnittstelle auf, zum Empfangen der Steuereingabe von dem Datenbusteilnehmer. Auch die Steuereingabeschnittstelle kann ähnlich wie die Datenverbindungsschnittstellen und die Spannungs-Verbindungsschnittstelle ausgeprägt sein, so dass sie ein lösbares Verbinden des Datenbusteilnehmers mit der Moduleinheit ermöglicht.

### 4. Kurze Beschreibung der Zeichnungen

Die Erfindung wird nachfolgend anhand von Ausführungsbeispielen mit den beigefügten Zeichnungen näher erläutert. Aus den beschriebenen Ausführungsbeispielen ergeben sich weitere Einzelheiten, Merkmale und Vorteile des Gegenstands der Erfindung. Es zeigen:
- Fig. 1: ein schematisches Blockdiagramm einer beispielhaften Automatisierungsanlage mit einer speicherprogrammierbaren Steuerung, einem übergeordneten Bus, einem Ausführungsbeispiel der erfindungsgemäßen Moduleinheit, sowie einen beispielhaften Ringbus;
- Fig. 2: ein schematisches Schaltdiagramm eines Ausführungsbeispiels der erfindungsgemäßen Moduleinheit ohne einen daran angeordneten Datenbusteilnehmer mit den Schaltmitteln in dem ersten Schaltzustand; und
- Fig. 3: ein schematisches Schaltdiagramm eines Ausführungsbeispiels der erfindungsgemäßen Moduleinheit mit einem daran angeordneten Datenbusteilnehmer mit den Schaltmitteln in dem zweiten Schaltzustand.

### 5. Beschreibung bevorzugter Ausführungsbeispiele

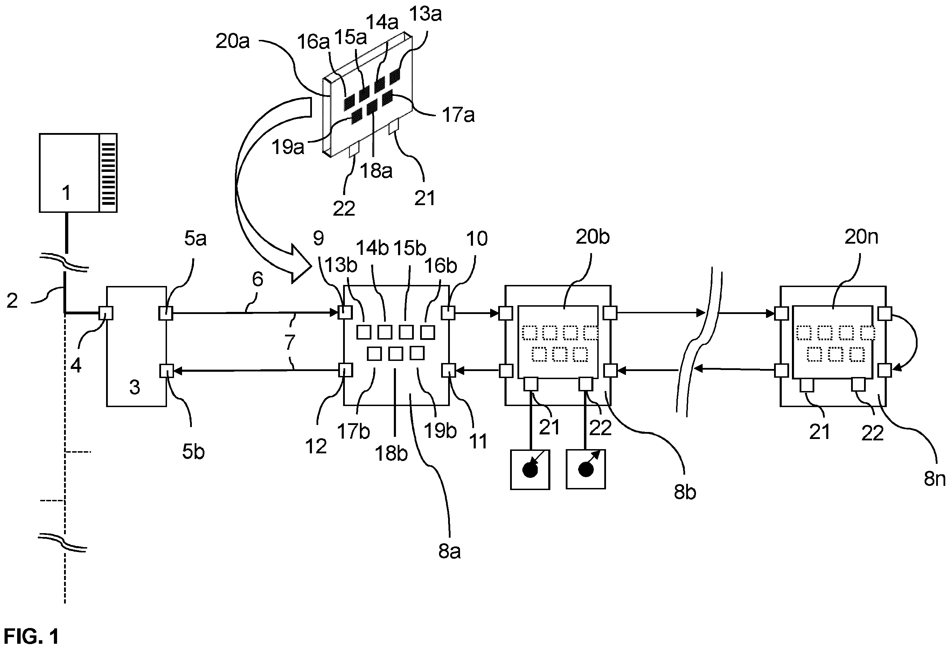

Figur 1 zeigt ein schematisches Blockdiagramm einer Automatisierungsanlage. Es wird vom Fachmann verstanden werden, dass die gezeigte Automatisierungsanlage nur beispielhaft ist und alle zu der Automatisierungsanlage gehörenden Elemente, Module, Bauteile, Teilnehmer und Einheiten verschieden ausgestaltet sein können aber dennoch die hier beschriebenen Grundfunktionalitäten erfüllen können.

Die in Figur 1 gezeigte Automatisierungsanlage weist eine übergeordnete Steuerung 1 auf, die beispielsweise mit einer speicherprogrammierbaren Steuerung, SPS, realisiert werden kann. Eine derartige SPS 1 dient grundsätzlich zur Steuerung und Regelung des von der Automatisierungsanlage ausgeführten Prozesses. Heutzutage übernehmen SPSs 1 in Automatisierungsanlagen allerdings auch weitergehende Funktionen, wie zum Beispiel die Visualisierung, Alarmierung und Aufzeichnung aller den Prozess betreffenden Daten und als solche fungiert die SPS 1 als eine Mensch-Maschine Schnittstelle. Es gibt SPS 1 in unterschiedlichen Leistungsklassen, die unterschiedliche Ressourcen (Rechenkapazität, Speicherkapazität, Anzahl und Art von Ein- und Ausgängen, und Schnittstellen) aufweisen, die es der SPS 1 ermöglichen den Prozess der Automatisierungsanlage zu steuern und zu regeln. Eine SPS 1 hat zumeist einen modularen Aufbau und besteht aus einzelnen Komponenten, die jeweils eine andere Aufgabe erfüllen. Üblicherweise besteht eine SPS 1 aus einer zentralen Rechenbaugruppe (mit einem oder mehreren Hauptprozessoren und Speichermodulen) und mehreren Baugruppen mit Eingängen und Ausgängen. Derartige modular aufgebaute SPS 1 lassen sich durch Hinzufügen von Baugruppen leicht erweitern. Hierbei hängt es von der Komplexität des Prozesses und der Komplexität des Aufbaus der Automatisierungsanlage ab, welche Baugruppen in der SPS 1 integriert sein müssen. In heutigen Automatisierungsanlagen ist die SPS 1 auch zumeist kein unabhängiges System mehr, sondern die SPS 1 ist über entsprechende Schnittstellen - hier nicht dargestellt - mit dem Internet oder Intranet verbunden. Dies bedeutet, die SPS 1 ist Teil eines Netzwerkes über welches oder von welchem die SPS 1 Informationen, Instruktionen, Programmierungen etc. erhalten kann. Zum Beispiel kann die SPS 1 über eine Verbindung zu einem sich im Intranet oder Internet befindlichen Computer Informationen über dem Prozess zugeführte Materialien bekommen, so dass beispielsweise durch die Kenntnis deren Anzahl oder Beschaffenheit der Prozess optimal gesteuert werden kann. Es ist auch denkbar, dass die SPS 1 durch einen Zugriff aus dem Intranet oder Internet von einem Anwender gesteuert wird. So kann beispielsweise ein Anwender mit Hilfe eines Computers, auch Leitrechner genannt, auf die SPS 1 zugreifen und deren Anwenderprogrammierung überprüfen, ändern, oder korrigieren. Dementsprechend ist der Zugriff auf die SPS 1 von einer oder mehreren Fernwarten oder Leitstellen möglich. Die Leitrechner können gegebenenfalls Visualisierungseinrichtungen zur Darstellung von Prozessabläufen haben.

Zur Steuerung des Prozesses der Automatisierungsanlage ist die SPS 1 mit Automatisierungsgeräten verbunden. Um den Verdrahtungsaufwand gering zu halten werden für diese Verbindungen Bussysteme verwendet. In dem in Figur 1 gezeigten Ausführungsbeispiel ist die SPS 1 mittels eines übergeordneten Busses 2, der in dem hier gezeigten Ausführungsbeispiel ein Feldbus sein kann, mit einem Lokalbusmaster 3 eines untergeordneten Lokalbussystems verbunden. An den übergeordneten Bus 2 können aber nicht nur wie in dem hier gezeigten Ausführungsbeispiel ein Lokalbusmaster 3 eines Lokalbusses angeschlossen werden, sondern auch andere beliebige Teilnehmer - hier nicht gezeigt -, die zur Kommunikation mit der SPS 1 ausgestaltet sind.

Der übergeordnete Bus 2 ist in dem hier gezeigten Ausführungsbeispiel mit dem Lokalbusmaster 3 verbunden. Hierzu weist der Lokalbusmaster 3 eine erste Schnittstelle 4 auf, die derart ausgelegt ist, dass diese mit dem übergeordneten Bus 2 verbunden werden kann. Die Schnittstelle 4 kann hierzu beispielsweise eine Aufnahme in Form einer Buchse aufweisen und der übergeordnete Bus 2 kann einen Stecker aufweisen, der von der Buchse aufgenommen werden kann. Dabei können der Stecker und die Buchse zum Beispiel ein Modularstecker und eine Modularbuchse sein, d.h. jede Ader des übergeordneten Busses 2 wird mit einer Verbindung in der Modularbuchse elektrisch oder optisch verbunden. Dem Fachmann sind aber auch andere Möglichkeiten bekannt, wie eine Schnittstelle 4 auszulegen ist, so dass der Lokalbusmaster 3 elektrisch oder optisch mit dem übergeordneten Bus 2 verbunden werden kann. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch gekoppelt werden und nur mit Aufwendung einer bestimmten Kraft wieder voneinander gelöst werden können. Es ist aber auch denkbar, dass der übergeordnete Bus 2 fest mit der Schnittstelle 4 verdrahtet ist.

Der Lokalbusmaster 3 in dem hier gezeigten Ausführungsbeispiel weist eine weitere zweite Schnittstelle auf, um den Lokalbusmaster 3 mit dem Lokalbus zu verbinden. wobei der Lokalbus als ein Ringbus 6 ausgestaltet ist. In diesem Fall teilt sich die zweite Schnittstelle in einen ersten Teil 5a und einen zweiten Teil 5b auf. Der erste Teil 5a der zweiten Schnittstelle stellt die Abwärtsverbindung im Ringbus 6 her und der zweite Teil 5b der zweiten Schnittstelle stellt die Aufwärtsverbindung im Ringbus 6 her.

Der Ringbus 6, dessen Datensenderichtung mit Pfeilen in dem in Figur 1 gezeigten Ausführungsbespiel gezeigt ist, weist in dem hier gezeigten Ausführungsbeispiel mehrere Moduleinheiten 8a, 8b, ..., 8n zur Verbindung mit Datenbusteilnehmern 20a, 20b, ..., 20n auf.

Ein Datenpaket, welches von dem Lokalbusmaster 3 auf den Lokalbus 6 gesendet wird durchläuft alle Moduleinheiten 8a, 8b, ..., 8n und mit denen verbundene Datenbusteilnehmer 20a, 20b, ..., 2on. Dabei empfängt ein Datenbusteilnehmer 20a, 20b, ..., 20n von seinem vorgelagerten Datenbusteilnehmer 20a, 20b, ..., 20n beziehungsweise einer Moduleinheit 8a, 8b, ..., 8n immer nur einen Teil des Datenpakets. Nach einer Zeitspanne in der die in diesem Teil enthaltenen Daten vom Datenbusteilnehmer 20a, 20b, ..., 20n verarbeitet werden können, wird der Teil an den nachgelagerten Datenbusteilnehmer 20a, 20b, ..., 20n weitergeleitet und gleichzeitig wird von dem vorgelagerten Datenbusteilnehmer 20a, 20b, ..., 20n beziehungsweise Moduleinheit 8a, 8b, ..., 8n ein neuer Teil des Datenpakets empfangen. Auf diese Weise passieren alle Teile des Datenpakets sequentiell alle Datenbusteilnehmer 20a, 20b, ..., 20n beziehungsweise Moduleinheiten 8a, 8b, ..., 8n. Der Lokalbus ist vorteilhafterweise in einer ringförmigen Struktur ausgebildet. Derartige Lokalbusse können auch als Ringbus 6 bezeichnet werden. Der Lokalbus kann alternativ auch strangförmig oder sternförmig oder aus einer Kombination oder Mischform der zuvor genannten ausgebildet sein. Die Moduleinheiten 8a, 8b, ..., 8n können auch als Basiselemente des Ringbusses 6 bezeichnet werden. Die Ringbusinfrastruktur wird dabei durch die Moduleinheiten 8a, 8b, ..., 8n aufgebaut und die Datenbusteilnehmer 20a, 20b, ..., 20n sind auswechselbar, so dass der Ringbus 6 mit beliebigen Datenbusteilnehmern 20a, 20b, ..., 20n aufgebaut werden kann. Mit Hilfe der Moduleinheiten 8a, 8b, ..., 8n ist auch sichergestellt, dass auch wenn ein Datenbusteilnehmer 20a, 20b, ..., 20n entfernt wird, die Kommunikation zwischen den restlichen Datenbusteilnehmern 20a, 20b, ..., 20n nicht unterbrochen wird, weil die Kommunikation über die noch vorhandenen Moduleinheiten 8a, 8b, ..., 8n geschieht.

Die Moduleinheiten 8a, 8b, ..., 8n weisen in dem hier gezeigten Ausführungsbeispiel jeweils eine erste Eingangsschnittstelle 9 auf, um Daten von einem auf dem Ringbus 6 vorgelagerten oder vorangehenden Teilnehmer, beispielsweise einer vorgelagerten Moduleinheit, einem Datenbusteilnehmer, oder einem Lokalbusmaster 3 zu empfangen. Das Empfangen kann aktiv oder passiv sein, d.h. es kann eine Signalverarbeitung stattfinden oder nicht. Im Fall von der gezeigten Moduleinheit 8a, empfängt diese über die erste Eingangsschnittstelle 9 Daten von dem vorgelagerten Lokalbusmaster 3. Des Weiteren weisen die Moduleinheiten 8a, 8b, ..., 8n in dem hier gezeigten Ausführungsbeispiel jeweils eine erste Ausgangsschnittstelle 10 auf, um Daten an eine nachgelagerte oder nachfolgende Moduleinheit und/oder Datenbusteilnehmer weiterzuleiten. In dem Fall von Moduleinheit 8a, sendet diese Daten an die nachgelagerte Moduleinheit 8b mit dem daran angebrachten Datenbusteilnehmer 20b über die erste Ausgangsschnittstelle 10. Das Senden kann aktiv oder passiv geschehen, d.h. es kann eine Signalverarbeitung sattfinden oder nicht. Die erste Eingangsschnittstelle 9 und die erste Ausgangsschnittstelle 10 dienen dabei dem Propagieren von Daten in Abwärtsrichtung des Ringbusses 6, d.h. von dem Lokalbusmaster 3 weg. Des Weiteren weisen die Moduleinheiten 8a, 8b, ..., 8n auch eine zweite Eingangsschnittstelle 11 und eine zweite Ausgangsschnittstelle 12 auf, die dem Propagieren von Daten in Aufwärtsrichtung des Ringbusses 6 dienen, d.h. zum Lokalbusmaster 3 hin. Im Fall der Moduleinheit 8a ist die zweite Eingangsschnittstelle 11 dabei dazu ausgelegt, Daten von der nachgelagerten oder nachfolgenden Moduleinheit 8b mit oder ohne daran angeordnetem Datenbusteilnehmer 20b zu empfangen und die zweite Ausgangsschnittstelle 12 ist dazu ausgelegt, Daten an den vorgelagerten oder die vorangehende Moduleinheit und/oder Datenbusteilnehmer, hier den Lokalbusmaster 3, weiterzuleiten. Es kann somit gesagt werden, dass die Ausgangsschnittstellen 10 und 12 Senderschnittstellen sind, wohingegen die Eingangsschnittstellen 9 und 11 Empfängerschnittstellen sind.

Auch wenn der Lokalbusmaster 3 und die einzelnen Moduleinheit 8a, 8b, ..., 8n mit oder ohne daran angebrachten Datenbusteilnehmern 20a, 20b, ..., 20n in dem hier gezeigten Ausführungsbeispiel voneinander beabstandet gezeigt sind, kann der Lokalbusmaster 3 auch dezentral von den Moduleinheit 8a, 8b, ..., 8n, angeordnet sein. Wie der Fachmann weiß können die Moduleinheit 8a, 8b, ..., 8n und der Lokalbusmaster 3 - der auch einen Datenbusteilnehmer des Ringbusses 6 darstellt - auch direkt miteinander verbunden werden. Die Kontakte der einen Moduleinheit 8a, 8b, ..., 8n greifen in entsprechende Aufnahmen oder Aufnahmekontakte einer direkt benachbarten Moduleinheit 8a, 8b, ..., 8n, um so eine elektrische oder optische Verbindung zwischen den Moduleinheiten 8a, 8b, ..., 8n herzustellen, damit Daten in Abwärts- und Aufwärtsrichtung gesendet werden können. Beispielsweise können die Moduleinheiten 8a, 8b, ..., 8n an der dem Master abgewandten Seite Aufnahmen und an der dem Master zugewandten Seite Kontakte aufweisen. Werden die Moduleinheiten 8a, 8b, ..., 8n dann entsprechend aneinandergereiht, so greifen die Kontakte der einen Moduleinheit 8a, 8b, ..., 8n jeweils in die Aufnahmen der anderen Moduleinheit 8a, 8b, ..., 8n und es kann eine elektrische oder optische Verbindung erzeugt werden. Der Lokalbusmaster 3 weist dann entsprechend Kontakte an der Seite auf, die in die Aufnahmen der ersten Moduleinheit 8a greifen, um so zwischen den Schnittstellen 5a und 9 beziehungsweise den Schnittstellen 5b und 12 eine elektrische oder optische Verbindung zu erzeugen. Dem Fachmann sind aber auch noch andere Möglichkeiten, z.B. Druckkontakte, Messer- und Gabelkontakte bekannt, wie zwei direkt aneinander angeordnete Moduleinheiten 8a, 8b, ..., 8n eine elektrische oder optische Verbindung herstellen können. Auch können die in Figur 1 separat gezeigten Moduleinheiten 8a, 8b, ..., 8n in einem gemeinsamen Gehäuse angeordnet sein, so dass ihre jeweiligen ersten und zweiten Eingangs- und Ausgangsschnittstellen 9 bis 11, gehäuseintern fest miteinander verschaltet sind, beispielsweise mittels Leiterbahnen.

Es ist vorgesehen, dass die Moduleinheiten 8a, 8b, ..., 8n und der Lokalbusmaster 3 direkt miteinander verbunden werden. Diese weisen entsprechend auch mechanische Aufnahmen oder mechanische Verbindungselemente auf, mit denen die einzelnen Moduleinheiten 8a, 8b, ..., 8n und der Lokalbusmaster 3 miteinander verbunden werden können. Hierbei weist eine Moduleinheit 8a, 8b, ..., 8n an einer Seite einen Vorsprung in Form eines Rasthakens und an der anderen Seite eine Hinterschneidung auf. Werden die Moduleinheiten 8a, 8b, ..., 8n dann aneinandergereiht, so greift ein Vorsprung in eine Hinterschneidung der anderen Moduleinheit 8a, 8b, ..., 8n ein, so dass eine mechanische Kopplung entsteht. Zur einfachen Aneinanderreihung der Moduleinheiten 8a, 8b, ..., 8n können diese auch auf einer gemeinsamen Aufnahme, zum Beispiel einer Hutschiene angeordnet werden. Zur Befestigung auf der Hutschiene können die Moduleinheiten 8a, 8b, ..., 8n entsprechende Befestigungsmittel aufweisen. Alternativ oder zusätzlich können die Moduleinheiten 8a, 8b, ..., 8n auch beispielsweise lösbar verbindbare Befestigungsmittel aufweisen, mit denen die Moduleinheiten 8a, 8b, ..., 8n entweder an der Hutschiene oder an einer anderen Aufnahme befestigt werden können. Dazu kann das lösbar verbindbare Befestigungsmittel austauschbar sein und ein entsprechendes Befestigungsmittel für die gewünschte Aufnahme kann mit den Moduleinheiten 8a, 8b, ..., 8n verbunden werden, so dass diese an der gewünschten Aufnahme befestigt werden können.

Die an den Moduleinheiten 8a, 8b, ..., 8n anbringbaren oder aufsteckbaren Datenbusteilnehmer 20a, 20b, 20n, verbinden sich über Datenverbindungsschnittstellen 13a, 14a, 15a, 16a mit entsprechenden Datenverbindungsschnittstellen 13b, 14b, 15b, 16b an den Moduleinheiten 8a, 8b, ..., 8n.

Die Datenverbindungsschnittstellen 13b, 14b, 15b, 16b an den Moduleinheiten 8a, 8b, ..., 8n sind wiederum mit den ersten und zweiten Eingangs- und Ausgangsschnittstellen 9, 10, 11, 12 verbunden. Die Datenbusteilnehmer 20a, 20b, 20n haben beispielsweise eine arithmetische-logische Einheit oder eine andere Art von Rechenkern mit dessen Hilfe Daten verarbeitet werden können. Diese Verarbeitungseinheit kann ein Prozessor, ein Mikrocontroller oder eine Rechenschaltung sein, die insbesondere aus Gatterelementen eines integrierten Schaltkreises gebildet sein kann. Die Rechenschaltung kann als digitale Logik ausgebildet sein, die insbesondere zumindest als ein Teil eines Halbleiterchips ausgebildet ist. Die Schaltungen können in einem anwendungsspezifischen integrierten Schaltkreis *(engl.* ASIC) oder in einer Feld programmierbaren (Logik-)Gatter-Anordnung *(engl.* FPGA) implementiert sein. Die Datenbusteilnehmer 20a, 20b, 20n können dazu ausgelegt sein, empfangene Daten von dem Ringbus 6 zu verarbeiten und Daten auszugeben. Die zu verarbeitenden Daten können empfangen werden entweder von einem vorgelagerten Datenbusteilnehmer 20a, 20b, 20n, dem Lokalbusmaster 3 oder von Teilnehmereingängen 21 des Datenbusteilnehmers 20a, 20b, 20n. Die Teilnehmereingänge 21 des Datenbusteilnehmers 20b können mit Sensoren verbunden sein, die zum Beispiel Messdaten, Zustandsdaten, etc. senden. Ausgegeben werden können verarbeitete Daten entweder an einen nachgelagerten Datenbusteilnehmer 20n oder an den Teilnehmerausgängen 22 des Datenbusteilnehmers 20b. Dabei können die Teilnehmerausgänge 22 des Datenbusteilnehmers 20b mit Aktoren verbunden sein, die zum Beispiel mit Hilfe der an sie gerichteten Daten eine bestimmte Aktion durchführen.

Die in diesem Ausführungsbeispiel gezeigten Datenbusteilnehmer 20a, 20b, 20n werden auf Grund ihrer Ein- und Ausgänge 21, 22, die mit Sensoren beziehungsweise Aktoren verbunden werden können, auch häufig als E/A-Module bezeichnet. Auch wenn die Datenbusteilnehmer 20a, 20b, 20n in dem hier gezeigten Ausführungsbeispiel als räumlich getrennt von den Sensoren, beziehungsweise Aktoren dargestellt sind, so können die Sensoren beziehungsweise Aktoren auch in dem Datenbusteilnehmer 20a, 20b, 20n integriert sein.

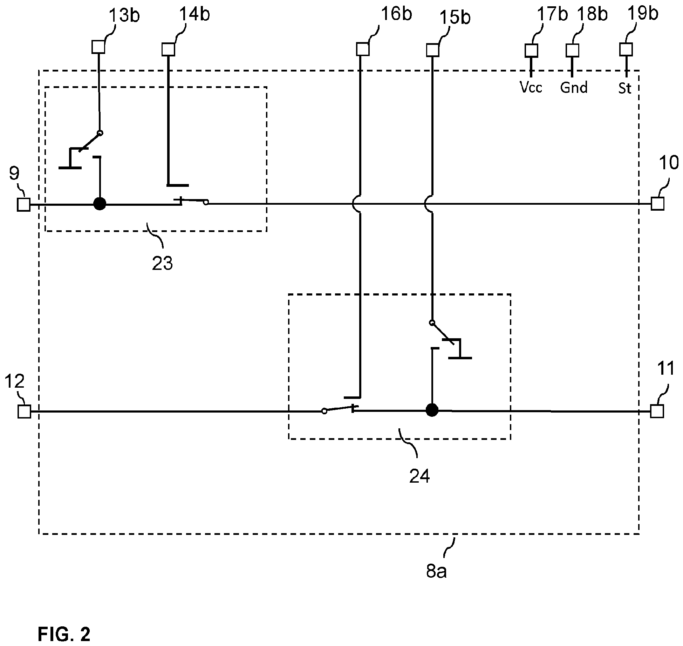

Die unterschiedlichen Schnittstellen 9 bis 19 an den Moduleinheiten 8a, 8b 8n, welche im Zusammenhang mit Figur 2 im Detail erläutert werden können beispielsweise eine Aufnahme in Form einer Buchse aufweisen und die jeweiligen Verbindungselemente, wie beispielsweise die Verbindungsleitungen 7 des Ringbusses 6 können jeweils einen Stecker aufweisen, der von der Buchse aufgenommen werden kann. Dem Fachmann sind aber auch andere Möglichkeiten bekannt, wie die Schnittstellen 9 bis 19 auszulegen sind, so dass die jeweiligen Verbindungselemente elektrisch oder optisch mit den Schnittstellen 9 bis 19 verbunden werden können. Dem Fachmann sind dabei, Schraub-, Dreh-, Klick- oder Steckverbindungen bekannt, mit deren Hilfe sich eine elektrische oder optische Verbindung herstellen lassen kann. Dabei wird zumeist ein männlicher Stecker von einem weiblichen Gegenstück aufgenommen. Diese Aufnahme stellt zumeist nicht nur die elektrische oder optische Verbindung her, sondern sorgt auch dafür, dass die beiden Teile mechanisch verbunden werden und nur mit Aufwendung einer bestimmten Kraft wieder voneinander gelöst werden können. Weiterhin ist dem Fachmann bekannt, dass nicht alle Schnittstellen 9 bis 19 die gleiche Art haben müssen. So können zum Beispiel einige der Schnittstellen 9 bis 19 als Steckverbindung ausgeführt sein, wobei andere der Schnittstellen 9 bis 19 als Schraubverbindungen ausgeführt sind.

Die unterschiedlichen Schnittstellen 9 bis 19 an den Moduleinheiten 8a, 8b, 8n, wie in Figur 1 exemplarisch für die Moduleinheit 8a gezeigt ist, können auf beliebigen Positionen und in einer beliebigen Reihenfolge an dem Gehäuse der Moduleinheit 8a angeordnet sein. Auch können weitere, hier nicht gezeigte Schnittstellen, an den Moduleinheiten 8a, 8b, 8n angebracht sein, mittels derer weitere Daten zwischen den Moduleinheiten 8a, 8b, 8n und den daran angeordneten Datenbusteilnehmer 20b, 20n ausgetauscht werden können. Weiterhin können auch weitere Schnittstellen an den Moduleinheiten 8a, 8b, 8n angebracht sein, um Daten zwischen den Moduleinheiten 8a, 8b, 8n auszutauschen, wie beispielsweise ein durch alle Moduleinheiten 8a, 8b, 8n durchgeschleiftes Statussignal.

In der Figur 2 wird ein Ausführungsbeispiel einer Moduleinheit ohne einen daran angeordneten Datenbusteilnehmer mit den Schaltmitteln 23, 24 in dem ersten Schaltzustand gezeigt. Die in Figur 2 gezeigte Moduleinheit 8a ist die in Figur 1 gezeigte Moduleinheit 8a. Die in Figur 2 gezeigte Moduleinheit 8a kann aber auch jede der anderen Moduleinheiten 8a, 8b, ..., 8n aus Figur 1 sein. Wie in Figur 1 gezeigt, ist die Moduleinheit 8a mit der ersten Eingangsschnittstelle 9 mit dem Lokalbusmaster 3 verbunden und mit der ersten Ausgangsschnittstelle 10 mit der Moduleinheit 8b. Diese Richtung bildet die Abwärtsrichtung für die Daten im Ringbus 6, also die Richtung vom Lokalbusmaster 3 weg. Die zweite Eingangsschnittstelle 11 der Moduleinheit 8a ist mit der Moduleinheit 8b verbunden und die zweite Ausgangsschnittstelle 12 ist mit dem Lokalbusmaster 3 verbunden. Diese Richtung bildet die Aufwärtsrichtung für Daten im Ringbus 6, also in Richtung zum Lokalbusmaster 3 hin. Die Daten in Abwärts- und Aufwärtsrichtung werden im Ringbus 6 von einem Teilnehmer - ein Teilnehmer kann eine Moduleinheit 8a, 8b, ... 8n mit oder ohne daran angeordnetem Datenbusteilnehmer 20a, 20b, ..., 20n sein oder auch nur ein Datenbusteilnehmer 20a, 20b, ..., 20n sein - zu einem vorgelagerten oder nachgelagerten Teilnehmer geleitet. Wie bereits bezüglich Figur 1 beschrieben wurde, müssen, damit der Ringbus 6 nicht unterbrochen wird, die Daten von einem zum anderen Teilnehmer geleitet werden können. Um die Funktionsfähigkeit des Ringbusses 6 sicherzustellen, müssen die Daten in Aufwärtsrichtung und in Abwärtsrichtung auch dann durch die Moduleinheiten 8a, 8b, ..., 8n geschleift werden, oder unterbrechungsfrei weitergeleitet werden, selbst wenn beispielsweise kein Datenbusteilnehmer 20a auf der Moduleinheit 8a angebracht ist. Hierfür weist die Moduleinheit 8a ein erstes Schaltmittel 23 für die Abwärtsrichtung und ein zweites optionales Schaltmittel 24 für die Aufwärtsrichtung auf. Wie in Figur 2 gezeigt, schaltet das erste Schaltmittel 23 die Abwärtsrichtung und das zweite Schaltmittel 24 schaltet die Aufwärtsrichtung. Dabei schaltet das erste Schaltmittel 23 die Abwärtsrichtung derart, dass in dem in Figur 2 gezeigten ersten Schaltzustand die erste Eingangsschnittstelle 9 der Moduleinheit 8a elektrisch oder optisch leitend mit der ersten Ausgangsschnittstelle 10 verbunden ist. Die Daten ausgehend vom Lokalbusmaster 3 werden dementsprechend direkt in Abwärtsrichtung durch die Moduleinheit 8a an die Moduleinheit 8b geleitet. Das hier optional gezeigte zweite Schaltmittel 24 schaltet die Aufwärtsrichtung derart, dass in dem in Figur 2 gezeigten ersten Schaltzustand die zweite Eingangsschnittstelle 11 der Moduleinheit 8a elektrisch leitend mit der zweiten Ausgangsschnittstelle 12 verbunden ist. Die Daten kommend von der Moduleinheit 8b werden dementsprechend direkt an den Lokalbusmaster 3 weitergeleitet. Alternativ zum zweiten Schaltmittel 24 kann auch eine direkte Verbindung zwischen der zweiten Eingangsschnittstelle 11 und der zweiten Ausgangsschnittstelle 12 vorhanden sein.

In der hier gezeigten Ausführungsform sind die ersten und zweiten Schaltmittel 23, 24 entweder elektronische Schalter oder elektromechanische Schalter. Dem Fachmann ist bekannt, dass die jeweiligen Schaltmittel 23, 24 aus einem oder mehreren elektronischen Schalter oder elektromechanischen Schalter aufgebaut sein können. Zum Beispiel können die jeweiligen Schaltmittel 23, 24 aus einem Relais mit mehreren Relaiskontakten, wie mehreren Öffner- und Schließerkontakten aufgebaut sein. Die Schaltmittel 23, 24 können entweder aus Halbleiterelementen oder aus Relais bestehen und von der Steuereingabe in Form eines elektrischen Steuersignals gesteuert werden. Allerdings ist dem Fachmann auch bekannt, dass die ersten und die zweiten Schaltmittel 23, 24 auch mechanische Schalter - hier nicht gezeigt - sein können, die in Abhängigkeit von einer mechanischen Steuereingabe, wie beispielsweise eine an dem Datenbusteilnehmer 20a angebrachte, stiftförmigen Geometrie zwischen dem ersten und dem zweiten Schaltzustand umschalten können.

Wie in Figur 2 gezeigt wird, weist die Moduleinheit 8a eine Steuereingabeschnittstelle 19b auf, zum Empfangen der Steuereingabe, beispielsweise eines Steuersignals, von einem Datenbusteilnehmer 20a und/oder zum Weiterleiten der Steuereingabe an die Schaltmittel 23, 24. In dem in Figur 2 gezeigten Beispiel steuert die Steuereingabe alle gezeigten Schaltmittel 23, 24 gleichzeitig. Das bedeutet, dass alle Schalter in den Schaltmitteln 23, 24 in Abhängigkeit von der Steuereingabe gleichzeitig schalten, so dass die Schaltmittel 23, 24 jeweils in Abhängigkeit von der Steuereingabe entweder den definierten ersten Schaltzustand oder den definierten zweiten Schaltzustand einnehmen. Die Schaltmittel 23, 24 können aber auch nacheinander geschaltet werden. In der in Figur 2 gezeigten Ausführungsform befinden sich die Schaltmittel 23, 24 in dem ersten Schaltzustand. Diesen ersten Schaltzustand können die Schaltmittel 23, 24 beispielsweise annehmen, wenn keine Steuereingabe vorliegt, beispielsweise wenn kein Datenbusteilnehmer 20a mit der Moduleinheit 8a verbunden ist. Wie bereits oben beschrieben, wird dadurch der Ringbus 6 bei dem Fehlen eines Datenbusteilnehmers 20a, beziehungsweise bei dem Fehlen einer Steuereingabe des Datenbusteilnehmers 20a nicht unterbrochen. D.h. in einem Fehlerfall des Datenbusteilnehmers 20a kann beispielsweise der erste Schaltzustand angenommen werden, weil eine entsprechende Steuereingabe fehlt. Dieser Fehlerfall kann sein, dass der Datenbusteilnehmer 20a nicht mehr zu Verarbeitung der Signale in der Lage ist, oder der Datenbusteilnehmer 20a nicht mehr korrekte Ausgaben liefert oder sich mechanisch zumindest teilweise von der Moduleinheit 8a gelöst hat, so dass nicht mehr alle Kontakte bestehen.

Die Schaltmittel 23, 24 können in der Moduleinheit 8a integriert sein, oder sich außerhalb der Moduleinheit 8a befinden. Weiterhin zeigt Figur 2, dass zumindest eine Datenverbindungsschnittstelle 13b, 15b je Schaltmittel 23, 24 in dem ersten Schaltzustand gegen Erde geschaltet ist. Dies ermöglicht, dass in dem ersten Schaltzustand zumindest an den beiden Datenverbindungsschnittstellen 13b, 15b ein definiertes Null-Signal anliegt. Dem Fachmann ist aber bekannt, dass die Schaltmittel 23, 24 auch ohne die Erdung der Datenverbindungsschnittstellen 13b, 15b in dem ersten Schaltzustand erfindungsgemäß funktionieren. Die Datenverbindungsschnittstellen 14b und 16b sind in dem in Figur 2 gezeigten Ausführungsbeispiel nicht beschaltet.

Figur 2 zeigt auch, dass die Moduleinheit 8a weiterhin eine Spannungs-Verbindungsschnittstelle 17b, 18b zum Verbinden einer Spannungsquelle mit dem Datenbusteilnehmer 20a aufweist. Die Spannungs-Verbindungsschnittstelle 17b, 18b kann ähnlich wie die anderen Schnittstellen an der Moduleinheit 8a ausgeprägt sein, so dass sie ein lösbares Verbinden des Datenbusteilnehmers 20a mit der Moduleinheit 8a möglich ist. Wenn ein Datenbusteilnehmer 20a an der Moduleinheit 8a angeordnet wird, kann die Spannungs-Verbindungsschnittstelle 17a, 18a den Datenbusteilnehmer 20a mit Netzspannung versorgen, so dass der Datenbusteilnehmer 20a betrieben werden kann. Dem Fachmann ist bekannt, dass sich die jeweilige Spannungsquelle in der Moduleinheit 8a befinden kann, oder außerhalb der Moduleinheit 8a angeordnet sein kann.

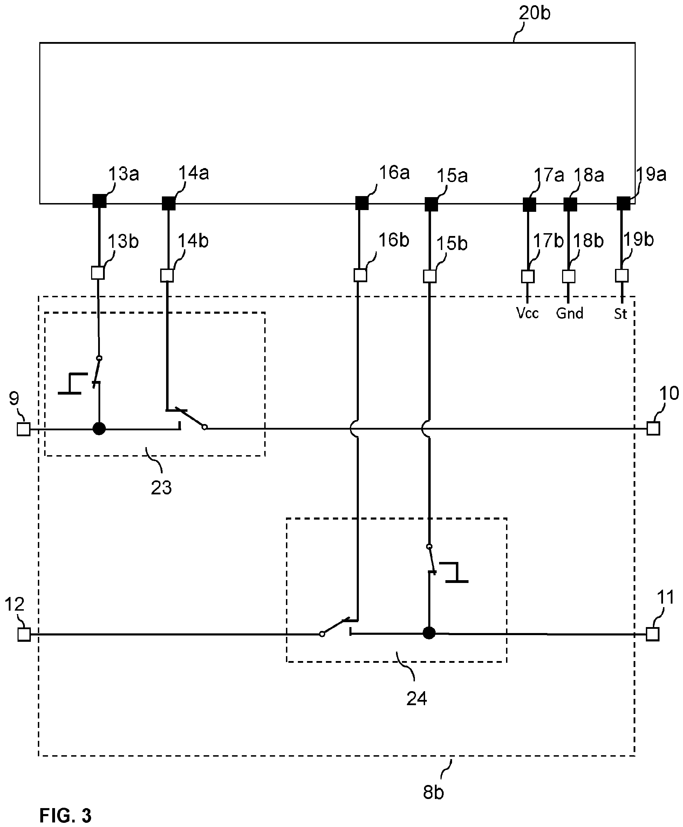

Figur 3 zeigt ein schematisches Schaltdiagramm eines Ausführungsbeispiels einer Moduleinheit 8b mit einem daran angebrachten Datenbusteilnehmer 20b mit den Schaltmitteln 23, 24 in dem zweiten Schaltzustand. Die in Figur 3 gezeigte Moduleinheit 8b ist die bereits in Figur 1 gezeigte Moduleinheit 8b mit einem daran angeordneten Datenbusteilnehmer 20b. Allerdings kann die gezeigte Moduleinheit 8b auch die bereits in Figur 2 gezeigte Moduleinheit 8a mit einem daran angebrachten Datenbusteilnehmer 20a sein, oder beispielsweise die in Figur 1 gezeigte Moduleinheit 8n.

Wie bereits bezüglich Figur 1 beschrieben wurde, können die unterschiedlichen Schnittstellen 9 bis 19 an der Moduleinheit 8b unterschiedlich ausgeführt sein. In dem in Figur 3 gezeigten Ausführungsbeispiel können die Schnittstellen 13b bis 19b, die den Datenbusteilnehmer 20b mit der Moduleinheit 8b verbinden, als Steckverbindungen ausgelegt sein, so dass der Datenbusteilnehmer 20b ohne den Einsatz von Werkzeug einfach per Hand auf die Moduleinheit 8b gesteckt werden kann. Hierfür kann der Datenbusteilnehmer 20b Schnittstellen aufweisen, die mit den Schnittstellen 13b bis 19b der Moduleinheit 8b korrespondieren und die mit den Schnittstellen 13b bis 19b verbunden werden können.

Der Vorteil der Moduleinheit 8b besteht darin, dass der Datenbusteilnehmer 20b während des laufenden Betriebes des Busses an der Moduleinheit 8b angeordnet werden kann. Wie bereits oben beschrieben, kann dies dadurch geschehen, in dem der Datenbusteilnehmer 20b auf die Moduleinheit 8b gesteckt wird. Nachdem alle Schnittstellen 13b bis 19b verbunden sind und der Datenbusteilnehmer 20b beispielsweise über die Spannungs-Verbindungsschnittstelle 17b, 18b mit Spannung versorgt wird, kann der Datenbusteilnehmer 20b sofort eine Steuereingabe in Form eines elektrischen Signals über die Steuereingabeschnittstelle 19b an die Moduleinheit 8b abgeben, damit die Schaltmittel 23, 24 von dem ersten Schaltzustand in den zweiten Schaltzustand umschalten. Der Datenbusteilnehmer 20b kann aber auch die Steuereingabe zu einem späteren Zeitpunkt über die Steuereingabeschnittstelle 19b abgeben. Beispielsweise nachdem dieser initialisiert wurde, oder ein Eingang des Datenbusteilnehmers 20b, wie bezüglich Figur 1 beschrieben, beschaltet wurde, usw.

In der in Figur 3 gezeigten Ausführungsform liegt die Steuereingabe in Form eines elektrischen Signals solange an der Steuereingabeschnittstelle 19b an, solange der Datenbusteilnehmer 20b mit der Moduleinheit 8b verbunden ist. Alternativ hierzu kann auch zusätzlich eine geeignete elektronische Schaltung genutzt werden, die es den Schaltern 23, 24 ermöglicht, zwischen dem ersten und dem zweiten Schaltzustand in Abhängigkeit von kurzen Schaltimpulsen, ausgehend von der Moduleinheit 18b, hin und her zu schalten.

In dem in Figur 3 gezeigten zweiten Schaltzustand ist die erste Datenverbindungsschnittstelle 13b mit der ersten Eingangsschnittstelle 9 verbunden und die zweite Datenverbindungsschnittstelle 14b ist mit der ersten Ausgangsschnittstelle 10 verbunden, die dritte Datenverbindungsschnittstelle 15b ist mit der zweiten Eingangsschnittstelle 11 verbunden und die vierte Datenverbindungsschnittstelle 16b ist mit der zweiten Ausgangsschnittstelle 12 verbunden. Eine direkte Verbindung in der Moduleinheit 8b zwischen den jeweiligen Ein- und Ausgangsschnittstellen findet in dem zweiten Schaltzustand, wie in Figur 3 gezeigt, nicht statt. Stattdessen wird die Aufwärts- und Abwärtsverrichtung des Ringbusses 6 über die Datenverbindungschnittstellen 13b bis 16b durch den Datenbusteilnehmer 20b geschleift. Der Datenbusteilnehmer 20b kann mit den durchgeschleiften Daten in Aufwärts- und/oder Abwärtsverrichtung eine Verarbeitung durchführen, bevor diese an die entsprechende Ausgangsschnittstelle 10 oder 12 weitergeleitet wird.

In der letzten im Ringbus 6 angeordneten Moduleinheit 8n kann das zweite Schaltmittel 24 auch den in Figur 3 gezeigten Schaltzustand nutzen, um Daten die von der Abwärtsrichtung kommen durch den Datenbusteilnehmer 20n zu schleifen und anschließend wieder auf die Aufwärtsrichtung zu senden. In diesem Fall wird keine Brückeneinheit an der letzten Moduleinheit 8n benötigt, die ansonsten die erste Ausgangsschnittstelle 10 mit der zweiten Eingangsschnittstelle 11 verbinden würde.

Die Moduleinheit 8b erlaubt es auch, dass der Datenbusteilnehmer 20b während des Betriebs entfernt werden kann. Nachdem der Datenbusteilnehmer 20b wieder von der Moduleinheit 8b entfernt wurde und der Anschluss des Datenbusteilnehmers 20b von der Steuereingabeschnittstelle 19b getrennt wurde, wird auch die Steuereingabe entfernt, beziehungsweise das Steuersignal wird auf null gesetzt. Dies hat zur Folge, dass die Schaltmittel 23, 24 wieder den ersten Schaltzustand einnehmen, wie es in Figur 2 gezeigt ist und eine Durchleitung in Abwärts- sowie Aufwärtsrichtung stattfindet.

### Bezugszeichenliste

- 1: speicherprogrammierbare Steuerung (SPS)
- 2: übergeordneter Bus
- 3: Lokalbusmaster
- 4: erste Schnittstelle
- 5a,b: zweite Schnittstelle
- 6: Ringbus
- 7: Verbindungsleitungen
- 8a, b, n: Moduleinheiten
- 9: erste Eingangsschnittstelle
- 10: erste Ausgangsschnittstelle
- 11: zweite Eingangsschnittstelle
- 12: zweite Ausgangsschnittstelle
- 13a, b: zweite Datenverbindungsschnittstelle
- 14a, b: erste Datenverbindungsschnittstelle
- 15a, b: dritte Datenverbindungsschnittstelle
- 16a, b: vierte Datenverbindungsschnittstelle
- 17a, b, 18a, b: Spannungs-Verbindungsschnittstelle
- 19a, b: Steuereingabeschnittstelle
- 20a, b, n: Datenbusteilnehmer
- 21: Teilnehmereingang
- 22: Teilnehmerausgang
- 23: erstes Schaltmittel
- 24: zweites Schaltmittel

## Patentansprüche

1. Ein System zum Verbinden eines Datenbusteilnehmers (20a, 20b, ..., 20n) mit einem lokalen Ringbus (6,7), das System aufweisend:
eine Mehrzahl von Moduleinheiten (8a, 8b, 8n), jede der Moduleinheiten (8a, 8b, 8n) aufweisend:
eine Aufwärts-Verbindung (6) mit dem lokalen Ringbus (6,7),
eine Abwärts-Verbindung (7) mit dem lokalen Ringbus (6,7), wobei die Aufwärts-Verbindung (6) und die Abwärts-Verbindung (7) den lokalen Ringbus (6,7) bilden, der die Moduleinheiten (8a, 8b, 8n) miteinander verbindet;
einen internen Schalter (23, 24); und
eine Mehrzahl von ersten Datenverbindungsschnittstellen (13b, 14b, 15b, 16b); und
eine Mehrzahl von Datenbusteilnehmern (20a, 20b, ..., 20n), jeder der Datenbusteilnehmer (20a, 20b, ..., 20n) aufweisend:
eine Schnittstelle (21, 22), die mit Sensoren oder Aktuatoren verbunden ist; und
eine Mehrzahl von zweiten Datenverbindungsschnittstellen (13a, 14a, 15a, 16a),
wobei jede der ersten Datenverbindungsschnittstellen (13b, 14b, 15b, 16b) entsprechend mit jeder der zweiten Datenverbindungsschnittstellen (13a, 14a, 15a, 16a) über eine lösbare mechanische Kopplung verbunden ist, das System **dadurch gekennzeichnet, dass** die Moduleinheiten (8a,8b,8n) ein mechanisches Verbindungselement aufweisen, das Rasthaken aufweist, die in Ausnehmungen oder Hinterschneidungen einer benachbarten Moduleinheit (8a, 8b, 8n) eingreifen.

2. Das System gemäß Anspruch 1, wobei jeder der Datenbusteilnehmer (20a, 20b, ..., 20n) kommuniziert durch Übertragen von Daten über die ersten Datenverbindungsschnittstellen (13b, 14b, 15b, 16b) und die zweiten Datenverbindungsschnittstellen (13a, 14a, 15a, 16a) und über die Aufwärts-Verbindung (6) und die Abwärts-Verbindung (7) zwischen jeder der Moduleinheiten (8a, 8b, 8n) entsprechend den Datenbusteilnehmern (20a, 20b, ..., 20n).

3. Das System gemäß Anspruch 2, wobei der interne Schalter (23, 24) in jeder der Moduleinheiten (8a, 8b, 8n) Verbindungen zwischen den Datenbusteilnehmern (20a, 20b, ..., 20n) und dem lokalen Ringbus (6,7) steuert.

4. Das System gemäß Anspruch 1, wobei die Datenbusteilnehmer (20a, 20b, ..., 20n) Steuersignale oder Messsignale in Prozessdaten für den lokalen Ringbus (6,7) umwandeln.

5. Das System gemäß Anspruch 1, wobei der lokale Ringbus (6,7) konfiguriert ist, um ein ununterbrochenes Signal zu übertragen, vorzugsweise wobei die Datenbusteilnehmer (20a, 20b, ..., 20n) konfiguriert sind, um basierend auf dem ununterbrochenen Signal zu synchronisieren.

6. Das System gemäß Anspruch 1, wobei einer oder mehrere der Datenbusteilnehmer (20a, 20b, ..., 20n) Datenpakete verarbeiten, die an der Aufwärts-Verbindung (6) und der Abwärts-Verbindung (7) übertragen werden.

7. Das System gemäß Anspruch 1, wobei eine oder mehrere der Moduleinheiten (8a, 8b, 8n) konfiguriert sind, um Signale entlang des lokalen Ringbusses (6,7) ohne einen verbundenen Datenbusteilnehmer (20a, 20b, ..., 20n) oder ohne ein Steuersignal des Datenbusteilnehmers (20a, 20b, ..., 20n) weiterzuleiten.

8. Das System gemäß Anspruch 1, wobei einer oder mehrere der Datenbusteilnehmer (20a, 20b, ..., 20n) durch eine entsprechende Moduleinheit (8a, 8b, 8n) der Moduleinheiten (8a, 8b, 8n) mit Energie versorgt werden.

9. Das System gemäß Anspruch 1, wobei die Moduleinheiten (8a, 8b, 8n) in einem gemeinsamen Gehäuse angeordnet sind.

10. Das System gemäß Anspruch 1, wobei die Moduleinheiten (8a, 8b, 8n) eine Steuereingabe von einem entsprechenden Datenbusteilnehmer (20a, 20b, ..., 20n) der Datenbusteilnehmer (20a, 20b, ..., 20n) auf ein elektrisches Signal überwachen, das anzeigt, dass der entsprechende Datenbusteilnehmer (20a, 20b, ..., 20n) verbunden ist.

11. Das System gemäß Anspruch 1, weiter aufweisend einen lokalen Busmaster (3), der mit den Datenbusteilnehmern (20a, 20b, ..., 20n) und den Moduleinheiten (8a, 8b, 8n) verbunden ist.

12. Das System gemäß Anspruch 11, wobei der lokale Busmaster (3) einen Zyklusrahmen des lokalen Ringbusses (6,7) durch Übertragen einer Datenstartkennung, SOC, definiert, wobei die Datenstartkennung ein eigenständiges Symbol ist.

13. Das System gemäß Anspruch 11, wobei der lokale Busmaster (3) Leerlauf-Daten überträgt, um ein ununterbrochenes Signal an den lokalen Ringbus (6,7) sicherzustellen, und wobei die Datenbusteilnehmer (20a, 20b, ..., 20n) konfiguriert sind, um basierend auf dem ununterbrochenen Signal zu synchronisieren.

## Claims

1. A system for connecting a data bus subscriber (20a, 20b, ..., 20n) to a local ring bus (6, 7), the system comprising:
a plurality of module units (8a, 8b, 8n), each of the module units (8a, 8b, 8n) comprising:
an upstream connection (6) with the local ring bus (6, 7),
a downstream connection (7) with the local ring bus (6, 7), wherein the upstream connection (6) and the downstream connection (7) form the local ring bus (6, 7) which interconnects the module units (8a, 8b, 8n);
an internal switch (23, 24); and
a plurality of first data connection interfaces (13b, 14b, 15b, 16b); and
a plurality of data bus subscribers (20a, 20b, ..., 20n), each of the data bus subscribers (20a, 20b, ..., 20n) comprising:
an interface (21, 22) connected to sensors or actuators; and
a plurality of second data connection interfaces (13a, 14a, 15a, 16a),
wherein each of the first data connection interfaces (13b, 14b, 15b, 16b) is correspondingly connected to each of the second data connection interfaces (13a, 14a, 15a, 16a) via a releasable mechanical coupling, the system being **characterized in that** the module units (8a, 8b, 8n) comprise a mechanical connection element comprising latching hooks that engage recesses or undercuts of an adjacent module unit (8a, 8b, 8n).

2. The system according to claim 1, wherein each of the data bus subscribers (20a, 20b, ..., 20n) communicates by transmitting data via the first data connection interfaces (13b, 14b, 15b, 16b) and the second data connection interfaces (13a, 14a, 15a, 16a) and via the upstream connection (6) and the downstream connection (7) between each of the module units (8a, 8b, 8n) corresponding to the data bus subscribers (20a, 20b, ..., 20n).

3. The system according to claim 2, wherein the internal switch (23, 24) in each of the module units (8a, 8b, 8n) controls connections between the data bus subscribers (20a, 20b, ..., 20n) and the local ring bus (6, 7).

4. The system according to claim 1, wherein the data bus subscribers (20a, 20b, ..., 20n) convert control signals or measurement signals into process data for the local ring bus (6, 7).

5. The system according to claim 1, wherein the local ring bus (6, 7) is configured to transmit an uninterrupted signal, preferably wherein the data bus subscribers (20a, 20b, ..., 20n) are configured to synchronize based on the uninterrupted signal.

6. The system according to claim 1, wherein one or more of the data bus subscribers (20a, 20b, ..., 20n) process data packets transmitted on the upstream connection (6) and the downstream connection (7).

7. The system according to claim 1, wherein one or more of the module units (8a, 8b, 8n) are configured to pass signals along the local ring bus (6, 7) without a connected data bus subscriber (20a, 20b, ..., 20n) or without a control signal of the data bus subscriber (20a, 20b, ..., 20n).

8. The system according to claim 1, wherein one or more of the data bus subscribers (20a, 20b, ..., 20n) is powered by a corresponding module unit (8a, 8b, 8n) of the module units (8a, 8b, 8n).

9. The system according to claim 1, wherein the module units (8a, 8b, 8n) are arranged in a common housing.

10. The system according to claim 1, wherein the module units (8a, 8b, 8n) monitor a control input from a corresponding data bus subscriber (20a, 20b, ..., 20n) of the data bus subscribers (20a, 20b, ..., 20n) for an electrical signal that indicates that the corresponding data bus subscriber (20a, 20b, ..., 20n) is connected.

11. The system according to claim 1, further comprising a local bus master (3) connected to the data bus subscribers (20a, 20b, ..., 20n) and the module units (8a, 8b, 8n).

12. The system according to claim 11, wherein the local bus master (3) defines a cycle frame of the local ring bus (6, 7) by transmitting a data start identifier, SOC, the data start identifier being an independent symbol.

13. The system according to claim 11, wherein the local bus master (3) transmits idle data to ensure an uninterrupted signal to the local ring bus (6, 7), and wherein the data bus subscribers (20a, 20b, ..., 20n) are configured to synchronize based on the uninterrupted signal.

## Revendications

1. Système de liaison d'un participant à un bus de données (20a, 20b,...,20n) à un bus local en anneau (6, 7), le système comportant :
une pluralité d'unités modulaires (8a, 8b, 8n), chacune des unités modulaires (8a, 8b, 8n) comportant :
une liaison montante (6) avec le bus local en anneau (6, 7),
une liaison descendante (7) avec le bus local en anneau (6, 7), dans lequel la liaison montante (6) et la liaison descendante (7) forment le bus local en anneau (6, 7), qui relie les unités modulaires (8a, 8b, 8n) entre elles ;
un commutateur interne (23, 24) ; et
une pluralité de premières interfaces de liaison de données (13b, 14b, 15b, 16b) ; et
une pluralité de participants de bus de données (20a, 20b,..., 20n), chacun des participants au bus de données (20a, 20b,..., 20n) comportant :
une interface (21, 22) qui est reliée à des capteurs ou des actionneurs ; et
une pluralité de deuxièmes interfaces de liaison de données (13a, 14a, 15a, 16a),
dans lequel chacune des premières interfaces de liaison de données (13b, 14b, 15b, 16b) est reliée de manière correspondante à chacune des deuxièmes interfaces de liaison de données (13a, 14a, 15a, 16a) par l'intermédiaire d'un couplage mécanique amovible,
le système étant **caractérisé en ce que** les unités modulaires (8a, 8b, 8n) comportent un élément de liaison mécanique qui comporte des crochets d'enclenchement qui viennent en prise avec des évidements ou des contre-dépouilles d'une unité modulaire (8a, 8b, 8n) adjacente.

2. Système selon la revendication 1, dans lequel chacun des participants au bus de données (20a, 20b,..., 20n) communique en transférant des données par l'intermédiaire des premières interfaces de liaison de données (13b, 14b, 15b, 16b) et des deuxièmes interfaces de liaison de données (13a, 14a, 15a, 16a) et par l'intermédiaire de la liaison montante (6) et de la liaison descendante (7) entre chacune des unités modulaires (8a, 8b, 8n) de manière à correspondre aux participants au bus de données (20a, 20b,..., 20n).

3. Système selon la revendication 2, dans lequel le commutateur interne (23, 24) de chacune des unités modulaires (8a, 8b, 8n) commande des liaisons entre les participants au bus de données (20a, 20b,..., 20n) et le bus local en anneau (6, 7).

4. Système selon la revendication 1, dans lequel les participants au bus de données (20a, 20b,..., 20n) convertissent des signaux de commande ou des signaux de mesure en données de processus pour le bus local en anneau (6, 7).

5. Système selon la revendication 1, dans lequel le bus local en anneau (6, 7) est configuré pour transmettre un signal ininterrompu, de préférence dans lequel les participants au bus de données (20a, 20b,..., 20n) sont configurés pour se synchroniser sur la base du signal ininterrompu.

6. Système selon la revendication 1, dans lequel un ou plusieurs des participants au bus de données (20a, 20b,..., 20n) traitent des paquets de données qui sont transmis sur la liaison montante (6) et la liaison descendante (7).

7. Système selon la revendication 1, dans lequel une ou plusieurs des unités modulaires (8a, 8b, 8n) sont configurées pour transférer des signaux le long du bus local en anneau (6, 7) sans participant relié au bus de données (20a, 20b,..., 20n) ou sans signal de commande du participant au bus de données (20a, 20b,..., 20n).

8. Système selon la revendication 1, dans lequel un ou plusieurs des participants au bus de données (20a, 20b,..., 20n) sont alimentés en énergie par une unité modulaire (8a, 8b, 8n) correspondante des unités modulaires (8a, 8b, 8n).

9. Système selon la revendication 1, dans lequel les unités modulaires (8a, 8b, 8n) sont disposées dans un boîtier commun.

10. Système selon la revendication 1, dans lequel les unités modulaires (8a, 8b, 8n) surveillent, sur une entrée de commande d'un participant correspondant au bus de données (20a, 20b,..., 20n) des participants au bus de données (20a, 20b,..., 20n), la présence d'un signal électrique qui indique que le participant correspondant au bus de données (20a, 20b,..., 20n) est relié.

11. Système selon la revendication 1, comportant en outre un maître local de bus (3) qui est relié aux participants au bus de données (20a, 20b,..., 20n) et aux unités modulaires (8a, 8b, 8n).

12. Système selon la revendication 11, dans lequel le maître local de bus (3) définit un cadrage de cycle du bus local en anneau (6, 7) en transmettant un repère de début de données, SOC, le repère de début de données étant un symbole propre indépendant.

13. Système selon la revendication 11, dans lequel le maître local de bus (3) transmet des données inactives pour garantir au bus local en anneau (6, 7) un signal ininterrompu, et dans lequel les participants au bus de données (20a, 20b,..., 20n) sont configurés pour se synchroniser sur la base du signal ininterrompu.
